# EUROPEAN PATENT APPLICATION

(11) **EP 1 610 249 A1**
(43) Date of publication of application: **28.12.2005**
(21) Application number: 05013306.5
(22) Date of filing: 20.06.2005
(51) Int. Cl.: G06F 17/60, G07G 1/00

(54) **Method and system for real-time collection of data related to sales to the final consumer of durable and semidurable goods**

(30) Priority: 23.06.2004 IT MI20041267
(71) Applicant: Coupon Line S.r.l., 20135 Milano (IT)
(72) Inventor: Cividini, Marcello, 22010 Argegno (Prov. of Como) (IT); Montangero, Enrico, 20122 Milano (IT)
(74) Representative: Modiano, Micaela Nadia

(57) **Abstract**

A method for real-time collection of data related to sales to the final consumer of durable or semidurable goods and a system that uses the method; the system comprises data reading means, which are adapted to read data related to a product when it is purchased, and at least one device (14) for interfacing with the system, which is provided with means (15, 18) for entering data related to the corresponding buyer, the reading means and the device (14) being connected to a database (22) for storing the data related to a purchased product and to its respective buyer.

## Description

The present invention relates to a method for real-time collection of data related to sales to the final consumer of durable or semidurable goods and to a system that uses said method.

For correct and reliable planning of production, both in terms of time and of quantity, manufacturing companies require information that is as precise and up-to-date as possible regarding the sales of their products to end users.

These data are difficult to obtain in real time or with delays that are acceptable for planning purposes, since their collection entails at least an intrinsic delay caused by the multiple links of the distribution chain. It is in fact necessary to repeat the operations for collecting relevant information and for transferring it to the previous link until the manufacturing company is reached. The set of all the required operations thus constitutes a long and complicated process, which is also onerous due to the involvement of various resources at every level.

The lack of up-to-date information regarding demand and the consequent unreliable planning, often based only on previously received orders, cause several negative effects, one of the best-known being the bull-whip effect, according to which a sudden peak in the demand of final consumers generates, at every level of the distribution chain, a volume of demand that is equal to a factor of the volume of demand at the preceding level. The retailer who suddenly finds himself without the product requested by the consumer not only orders such product from the reseller but also requests a certain quantity of products to be kept in stock as a reserve in order to avoid being unable to meet the demand of his clients in the future.

This sudden and unexpected request places the reseller in a similar situation, which leads him to behave in a similar manner: accordingly, he orders from the distributor a quantity of products that is equal to a factor of the order received from the retailer.

By extending the effect to the entire distribution chain, it can be easily imagined that the manufacturing company receives orders that are disproportionate with respect to the temporary increase in demand, which can be caused for example by a particular promotional campaign and therefore will return to average levels at the end of the campaign.

The manufacturing company, in order to generate a quantity of products that copes with the orders and produces sufficient reserve in store, is forced to higher-than-normal production costs, and optionally has to extend temporarily the work capacity in order to increase in turn the production rate or order components at higher prices in order to obtain them in shorter times.

Moreover, once the demand returns to standard values, the excess produced quantity can be placed only slowly, causing additional costs of various kinds (costs for storage, locked-up capital, and so forth).

Computer-implemented systems are currently known which, if used at each level of the distribution chain, allow real-time collection of information regarding the current demand for each product, thus preventing effects such as the bull-whip effect.

These systems, known as SCM (supply chain management) systems, allow, by means of the cooperation and exchange of information with selected partners, the design, planning and management of the production activities of a product and their integration along the entire distribution chain. They have demonstrated the ability to provide true planning advantages, reducing delivery times and accordingly reducing the necessary stock reserves. In particular, SCM systems are capable of increasing the reaction speed of a manufacturing company with respect to sudden variations of market conditions.

Disadvantageously, their implementation requires high costs and is particularly complicated, and entails, in order to achieve true results, cooperation at all the levels of the distribution chain. Moreover, once said system has been implemented at every level, one is bound to an exclusive cooperation and therefore one cannot utilize any favorable markets dynamics.

A known method, which is less complicated and is independent of the distribution partners for the product and allows to collect the data of sales to the final consumer of durable or semidurable goods is based on the return of the warranty at the consumer's discretion; according to this method, after making a purchase the consumer should fill in the warranty coupon with his data and send it to the manufacturing company, so that such company enters it in its customer data bank and is able to identify such consumer in a situation requiring the warranty.

This method has an effectiveness that is variable depending on the sector, since return of warranties rarely exceeds 30% of actual sales. Moreover, these data reach the manufacturing company with a certain delay with respect to the moment of sale, and said delay may further consist of any amount of time and is therefore unpredictable. Warranty coupons in fact often reach the manufacturing company only when a product fault occurs and the consumer needs to use the warranty.

The aim of the present invention is to eliminate the drawbacks described above in known types of systems and methods that allow real-time collection of data related to sales to the final consumer, by providing a method by means of which it is possible to collect said data related to durable or semidurable goods in a manner that is reliable and complete but independent of the specific partners for product distribution and sales.

Within this aim, an object of the present invention is to provide a system that is capable of implementing the method for real-time collection of data related to sales to the final consumer.

Another object of the present invention is to provide a system for real-time collection of data related to sales to final consumers that is simple to implement and independent of the particular product distributors and resellers.

Another object of the present invention is to provide a system for real-time collection of data related to sales to final consumers that can be implemented at competitive costs.

This aim and these and other objects of the present invention that will become better apparent hereinafter are achieved by a system for real-time collection of data related to sales to the final consumer of durable or semidurable goods at a point of sale, characterized in that it comprises data reading means, which are adapted to read data related to a product when it is purchased, and at least one device for interfacing with the system, which is provided with means for entering data related to the corresponding buyer, said reading means and said interface device being connected to a database for storing said data related to a purchased product and to its respective buyer.

Conveniently, said data entry means comprise an interface with the GSM or UMTS mobile communications network and/or a keyboard interface, or a face recognition device.

Advantageously, the system interface device comprises means for issuing warranty coupons that contain the warranty details determined by processing means on the basis of the data acquired from said data reading means and the data entered in said interface devices.

Further characteristics and advantages of the invention will become better apparent from the description of a preferred but not exclusive embodiment of the system for real-time collection of data related to sales to the final consumer, illustrated by way of non-limiting example in the accompanying drawings, wherein:
Figure 1 is a schematic diagram of a preferred but not exclusive embodiment of the system according to the invention;
Figure 2 is a schematic view of a particular embodiment of a system interface device according to the invention;
Figure 3 is a block diagram of the method for real-time collection of data related to sales to the final consumer according to the invention.

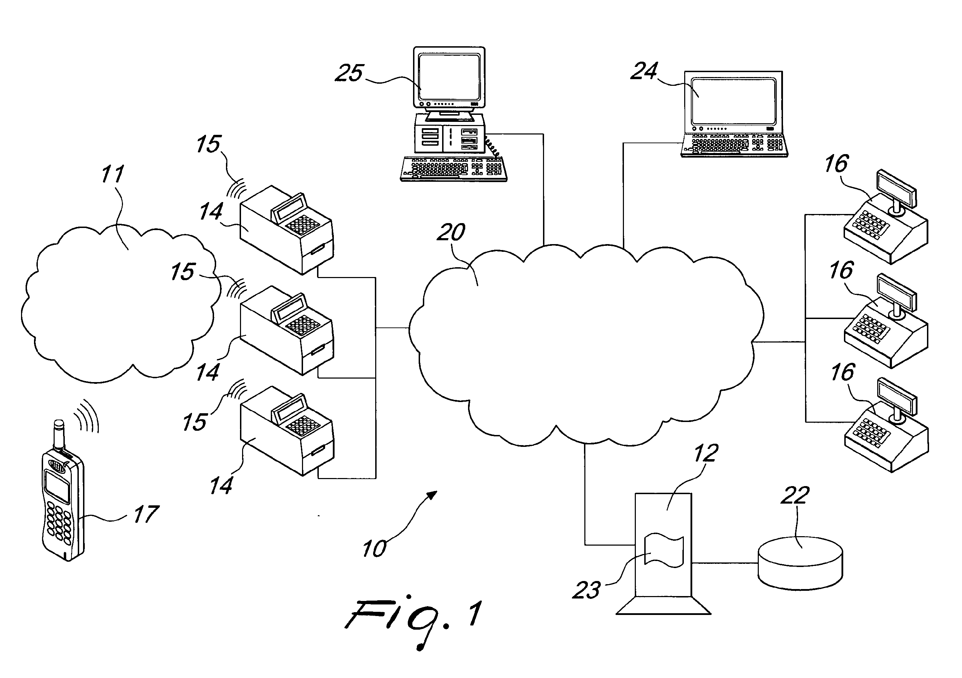

As shown schematically in Figure 1, the system 10 comprises at least one, and preferably a plurality of, checkout counters 16 connected to a data communications network 20, which can be of any type depending on the particular requirements of implementation. Said checkout counters 16 are generally provided with data reading means (not shown), which facilitate the entry in the system 10 of the data related to a product when it is purchased. Said data reading means can comprise for example a scanning device for reading, during payment, not only the price but also other data related to the purchased product, such as the brand, model and type of the product.

Moreover, a central server 12 and a plurality of devices 14 for interfacing between the consumer and the system 10 are connected to the data communications network 20; the server is adapted to receive and process the data acquired by the reading means of the checkout counters 16 related to the purchased product, and said interfacing devices are arranged in a point of sale, preferably in the vicinity of the checkout counters 16.

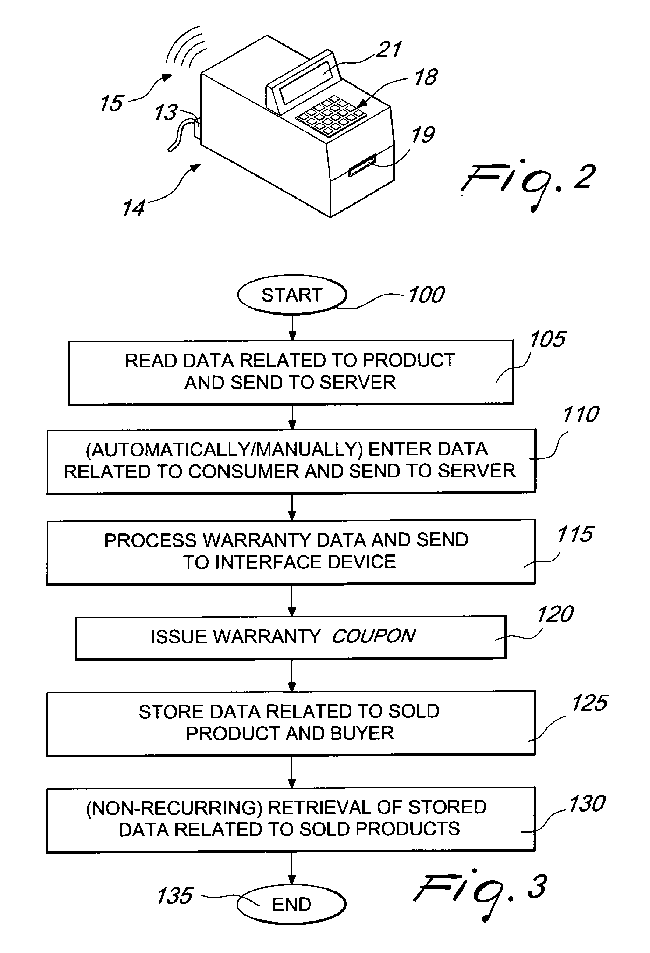

As shown in Figure 2, said system interface devices 14 are provided with one or more inputs 15 and outputs 13 for receiving information that identifies consumers, for sending said information to the central server 12, and for receiving from the server 12 data related to the warranty coupons (not shown) to be issued.

The inputs 15 and outputs 13 can assume different forms. In a preferred but not exclusive embodiment shown in Figure 1, the inputs 15 receive data from a mobile communications network 11, for example of the GSM or UMTS type, and consumer identification occurs by means of the number of a cellular telephone 17 owned by the user. These devices are currently widespread among consumers and are generally always carried, and therefore consumer identification does not require a buyer to also carry with him a specifically provided device.

As an alternative, if the consumer, at the time of purchase, does not have a cellular telephone 17, the data related to the particular user can be entered manually by means of a keyboard interface 18, which is generally located on the system interface device 14.

If the keyboard interface 18 has only keys related to digits, it is possible to use as identifying information a fixed or mobile telephone number or another type of numeric code. As an alternative, if the keyboard interface 18 also allows to enter other characters, alphanumeric codes also can be used to identify the user.

As an alternative, the interface can comprise a face recognition device.

Optionally, the system interface device 14 can also comprise a display 21 for monitoring the status of said device 14 and the data keyed in during manual entry.

In the particular embodiment of Figure 1, the system interface devices 14 further comprise printing means (not shown), which are connected to an output 19, from which the warranty coupons related to a purchased product are issued, said coupons being printed by way of the printing means and containing the data related to the warranty coupons that have been processed by the server 12 and then sent to the devices 14.

As an alternative, the warranty coupons can also assume forms other than paper. For example, if so requested, they can be sent over the data communication network 20 directly to the terminal of the consumer, generally in the form of e-mail. For this purpose, when the identification data are entered, the consumer who wishes to receive the warranty coupon in electronic form enters the data needed for this purpose, such as for example his e-mail address.

The data related to the product and the data related to its buyer are processed in the server 12 by way of the processing means 23, which in addition to determining the details of the warranty to be entered in the corresponding coupons and sending them to the devices 14 or directly to the terminal of the user, generate an association between the two received data sets. Finally, the server 12 stores said data with the respective associations in an archive stored in a database 22, which is connected to the server or comprised therein.

Terminals of various kinds, connected to the network 20, such as a personal computer 25 or a laptop 24, if provided with the appropriate interfacing software, can access the server 12 and thus access the data stored in the database 22. Moreover, if the data communications network 20 is linked to the Internet, it is also possible to provide remote access in the individual points of sale on the part of the manufacturing company, which thanks to the automatic updating of the database 22 is capable of accessing constantly up-to-date data at all times.

In order to ensure in this case that only authorized personnel accesses the server 12, it is possible to provide various measures already known in the field of security in the exchange of data over the Internet, such as for example protection of the data by means of a limited-access input (user/password) and protected data transmission via SSL (secure socket layer) or a VPN (virtual private network).

Operation of the system according to the invention is as follows.

When a product is paid (step 105 of Figure 3), the data related to said product are generally read automatically by scanning. The data that identify the purchased product, such as for example the name, the brand, the type and the serial number, are sent over the data communications network 20 to the server 12.

In step 110, the consumer at the system interface device 14 is identified. As discussed earlier, this identification can occur automatically or manually depending on the inputs 15, 18 with which the device 14 is provided and depending on the specific requirement of the consumer.

In the case of the embodiment shown in Figure 2, the input 15 is a GSM, GPRS or UMTS module provided with a SIM card with which a telephone number is associated. Automatic identification occurs by means of a cellular telephone 17, which by connecting to the telephone number related to the GSM, GPRS or UMTS module, transmits thereto its own telephone number, by means of which the consumer is identified.

As an alternative, the consumer can enter said number or another number or his own e-mail address or another alphanumeric code by means of the keyboard interface 18.

As in the preceding step, the data related to the buyer, collected automatically or manually, are sent to the server 12.

Then, in step 115, the server 12 processes the data related to the warranty coupon to be issued, associating the data received with reference to the sold product and its buyer. These data are sent to the system interface device 14 or directly to the terminal of the consumer if said consumer wishes to receive the warranty coupon in electronic form directly on his own terminal.

In step 120, the warranty coupon is issued in the format selected by the user. If the paper format has been selected, the warranty coupon is printed by the printing means comprised in the system interface device 14 and then ejected through the output 19, so that the consumer can take it.

The data collected in steps 105 and 110 are stored in step 125 in the database 22, so that they can be accessed at all times via the data communications network 20.

In step 130, the operators of the manufacturing company retrieve, when necessary, said sales data in order to use them for various purposes in production management, including short- and/or long-term planning. Data retrieval can occur directly if the data communications network 20 is linked to the Internet and allows access from outside. Otherwise, it is possible to implement another type of procedure for sending the collected data automatically or not.

In practice it has been found that the system according to the invention fully achieves the intended aim and objects, since it is capable of collecting semiautomatically the data related to the sales of durable or semidurable products when they occur and to make them immediately available. The return of the warranty is in fact not at the consumer's discretion but is a step that is integrated in the product payment procedure.

Moreover, it has been found that the system according to the invention thus described can be implemented simply and at competitive costs, since it does not require the cooperation of all the companies involved in the distribution and sale of the particular durable or semidurable products to be monitored.

Moreover, it has been found that the method according to invention can collect data related to the sale of durable or semidurable goods reliably and completely, independently of the particular partners for product distribution and sale.

The invention thus conceived is susceptible of numerous modifications and variations, all of which are within the scope of the appended claims.

Thus, for example, the system interface device can have an input for entering data related to the buyer by means of a cellular telephone and a keyboard interface for the manual entry of said data. The presence of multiple interfaces of various types is also possible.

Moreover, the data communications network for interconnecting the the components can be of any type supported by the database access and querying devices.

It is further evident that the inventive concept on which the present invention is based is independent of the actual implementation of the software modules, which can be provided in any language and on any hardware platform, and that the method of integration between the server and the querying terminals is also non-limiting in terms of the invention.

Therefore, the scope of the protection of the claims must not be limited by the illustrations or by the preferred embodiments given in the description by way of example, but rather the claims must comprise all the characteristics of patentable novelty that reside within the present invention, including all the characteristics that would be treated as equivalent by the person skilled in the art.

The disclosures in Italian Patent Application No. MI2004A001267 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system for real-time collection of data related to sales to the final consumer of durable or semidurable goods at a point of sale, **characterized in that** it comprises data reading means, which are adapted to read data related to a product when it is purchased, and at least one device (14) for interfacing with the system, which is provided with means (15, 18) for entering data related to the corresponding buyer, said reading means and said interface device (14) being connected to a database (22) for storing said data related to a purchased product and to its respective buyer.

2. The system for real-time collection of data related to sales to the final consumer of durable or semidurable goods in a point of sale according to claim 1, **characterized in that** said data entry means (15) comprise an interface with a mobile communications network (11) of the GSM or UMTS type.

3. The system for real-time collection of data related to sales to the final consumer of durable or semidurable goods in a point of sale according to one or more of the preceding claims, **characterized in that** said data entry means (18) comprise a keyboard interface.

4. The system for real-time collection of data related to sales to the final consumer of durable or semidurable goods in a point of sale according to one or more of the preceding claims, **characterized in that** said database (22) is connected to a server (12), which comprises processing means (23) adapted to determine the details of the warranty of a purchased product.

5. The system for real-time collection of data related to sales to the final consumer of durable or semidurable goods in a point of sale according to claim 4, **characterized in that** said at least one device (14) for interfacing with the system comprises means for issuing warranty coupons that contain said warranty details.

6. The system for real-time collection of data related to sales to the final consumer of durable or semidurable goods in a point of sale according to claim 5, **characterized in that** said means for issuing warranty coupons are printing means.

7. The system for real-time collection of data related to sales to the final consumer of durable or semidurable goods in a point of sale according to one of claims 5 or 6, **characterized in that** said means for issuing warranty coupons are electronic issuing means.

8. The system for real-time collection of data related to sales to the final consumer of durable or semidurable goods in a point of sale according to one or more of the preceding claims, **characterized in that** said data reading means are located at at least one checkout counter (16).

9. The system for real-time collection of data related to sales to the final consumer of durable or semidurable goods in a point of sale according to claim 8, **characterized in that** said server (12), said at least one checkout counter (16) and said at least one system interface device (14) are mutually connected by means of a data communications network (20).

10. The system for real-time collection of data related to sales to the final consumer of durable or semidurable goods in a point of sale according to claim 9, **characterized in that** said data communications network (20) can be accessed by users who are external to the point of sale.

11. The system for real-time collection of data related to sales to the final consumer of durable or semidurable goods in a point of sale according to one or more of the preceding claims, **characterized in that** said at least one system interface device (14) is arranged proximate to a checkout counter (16).

12. A method for real-time collection of data related to sales to the final consumer of durable or semidurable goods in a point of sale, comprising the steps of:
a) reading data related to a product when it is purchased and sending said read data to a processing unit (12, 23);
b) entering the data related to the buyer of the purchased product and sending the entered data to said processing unit (12, 23);
c) processing the details of the warranty of the purchased product on the basis of the received data;
d) issuing a coupon that contains the processed warranty details;
e) storing the data related to the sold product.

13. The method for real-time collection of data related to sales to the final consumer of durable or semidurable goods in a point of sale according to claim 12, **characterized in that** it further comprises the step of extracting said stored data.

14. The method for real-time collection of data related to sales to the final consumer of durable or semidurable goods in a point of sale according to one of claims 12 or 13, **characterized in that** the issuing of the coupon occurs in the form of a printout or of a transmission of electronic data.
